# EUROPÄISCHE PATENTSCHRIFT

(11) **EP 1 340 305 B1**
(45) Veröffentlichungstag und Bekanntmachung des Hinweises auf die Patenterteilung: **29.09.2004**
(21) Anmeldenummer: 01999030.8
(22) Anmeldetag: 23.11.2001
(51) Int. Cl.: H02K 1/18, H02K 15/02

(54) **WERKSTÜCK**
WORKPIECE
PIECE

(30) Priorität: 25.11.2000 DE 10058592
(43) Veröffentlichungstag der Anmeldung: 03.09.2003
(73) Patentinhaber: ROBERT BOSCH GMBH, 70442 Stuttgart (DE)
(72) Erfinder: BASSLER, Juergen, 77830 Buehlertal (DE); BOELL, Stephan, 50070 Toluca (MX)
(86) Internationale Anmeldenummer: PCT/DE2001/004386
(87) Internationale Veröffentlichungsnummer: WO 2002/045240

(56) Entgegenhaltungen:
- DE-A- 2 147 169
- US-A- 2 283 918
- US-A- 5 768 934
- US-A- 5 903 967
- PATENT ABSTRACTS OF JAPAN vol. 009, no. 284 (E-357), 12. November 1985 (1985-11-12) & JP 60 125158 A (FUJI DENKI KAGAKU KK), 4. Juli 1985 (1985-07-04)

## Beschreibung

### Stand der Technik

Die Erfindung geht aus von einem Werkstück nach der Gattung des Anspruchs 1. Ein derartiges Werkstück ist in der Druckschrift JP-A-60 125 158 beschrieben.

Es sind sogenannte Bördel-Verbindungen bekannt, bei denen zwei Werkstücke zunächst so ineinander gesteckt werden, daß das eine Werkstück sich gegen einen Anschlag des anderen stützt und dieses mit einem Rand, dem Bördel-Rand, überragt. Das Verbinden wird durch Umlegen, dem Bördel, des Bördel-Rands auf das eine Werkstück durchgeführt, so daß die Werkstücke formschlüssig gefügt sind. Bei dieser Art von Verbindung sind zwei Werkstücke erforderlich und es läßt sich nur aufwendig eine definierte Kontur des umgelegten Bördel-Rands erreichen. Ein Bördel-Rand muß oft ganz umlaufend um ein Werkstück vorhanden sein. Nach dem Verbinden ist also oft ein axialer und/oder radialer Überstand vorhanden.

Weiterhin bekannt sind sogenannte Schwalbenschwanzverbindungen, bei denen Toleranzen sehr eng gehalten werden müssen. Beim Verbindungsprozess werden ein Kopfteil und eine Aussparung der Schwalbenschwanzverbindung übereinandergelegt und anschließend ineinander gepreßt, wie es in der DE 39 25 365 A1 beschrieben ist. Die Teile müssen dabei übereinandergelegt werden und werden nicht ineinander verschoben, so daß die zu verbindenden Teile etwas länger auszubilden sind und die Toleranz, zum Beispiel eines Innendurchmessers eines Rohrelements, größer ist.

Aus der DE 38 15 927 A1 ist eine Verbindung von Formteilen durch elastische Haltearme bekannt. Bei dieser Ausgestaltung entstehen jedoch zwangsläufig Lücken zwischen den Formteilen. Ein lückenloser Übergang zwischen den Formteilen ist nicht möglich.

Aus der US-PS 2,283,918 ist eine Verbindungsmethode für ein Metallband bekannt, bei der eine Zunge in eine Vertiefung verstemmt wird. Um die Verstemmung durchzuführen, sind ein voluminöses Werkzeug und hohe Kräfte notwendig.

Aus der US-PS 3,502,922 ist eine Rastverbindung bekannt, die aus einer Steckzunge und einer Vertiefung besteht. Die Steckzunge und die Vertiefung werden, um eine Verbindung herzustellen, ineinander geschoben. Dabei sind die Bereiche um die Vertiefung elastisch ausgelegt, damit sie sich beim Ineinanderschieben von Steckzunge und Vertiefung weiten und wieder zurückfedern können. Dadurch ergibt sich ein gewisses Spiel zwischen den Teilen.

Eine weitere Möglichkeit einen Ring auf einem Innenteil zu montieren, ist die Schrumpftechnik. Dabei wird z.B. das Innenteil abgekühlt, damit es schrumpft. Erst dann kann der Ring auf das Innenteil aufgeschoben werden. Wenn sich das Innenteil wieder erwärmt hat, kommt es zu einer Presspassung zwischen Innenteil und Ring. Das Verfahren ist aber aufwendig und hat den Nachteil, dass sich die Verbindung löst, wenn sich Ring und Innenteil unterschiedlich abkühlen oder erwärmen.

### Vorteile der Erfindung

Das erfindungsgemäße Werkstück mit den kennzeichnenden Merkmalen des Anspruchs 1 hat demgegenüber den Vorteil, daß auf einfache Art und Weise ein Werkstück auf ein Bauteil montiert werden kann und keine Toleranz vorhanden ist. Das Werkstück weist nach dem Verbindungsprozeß weder axialen noch radialen Überstand auf.

Durch die in den abhängigen Ansprüchen aufgeführten Maßnahmen sind vorteilhafte Weiterbildungen und Verbesserungen des im Anspruch 1 genannten Werkstücks möglich.

Wenn das Werkstück ein Rohrelement bildet, kann es auf vorteilhafte Weise auf einem Innenteil montiert sein.

Weiterhin vorteilhaft ist es, die Aussparung ähnlich einer Hantelform auszubilden, weil dadurch die plastische Verformung zur toleranzfreien Montage vereinfacht ist.

Das Werkstück besteht vorteilhafterweise aus Metall, weil sich Metall gut plastisch verformen lässt.

### Zeichnung

Ein Ausführungsbeispiel der Erfindung ist in der Zeichnung vereinfacht dargestellt und in der nachfolgenden Beschreibung näher erläutert.

Es zeigen
Figur 1 einen Ausschnitt eines erfindungsgemäßen Werkstücks in unmontiertem Zustand,
Figur 2 einen Ausschnitt eines erfindungsgemäßen Werkstücks, das plastisch verformt ist,
Figur 3a wie ein erfindungsgemäßes Werkstück über ein Innenteil geschoben wird, und
Figur 3b wie ein erfindungsgemässes Werkstück auf dem Innenteil montiert ist.

### Beschreibung des Ausführungsbeispiels

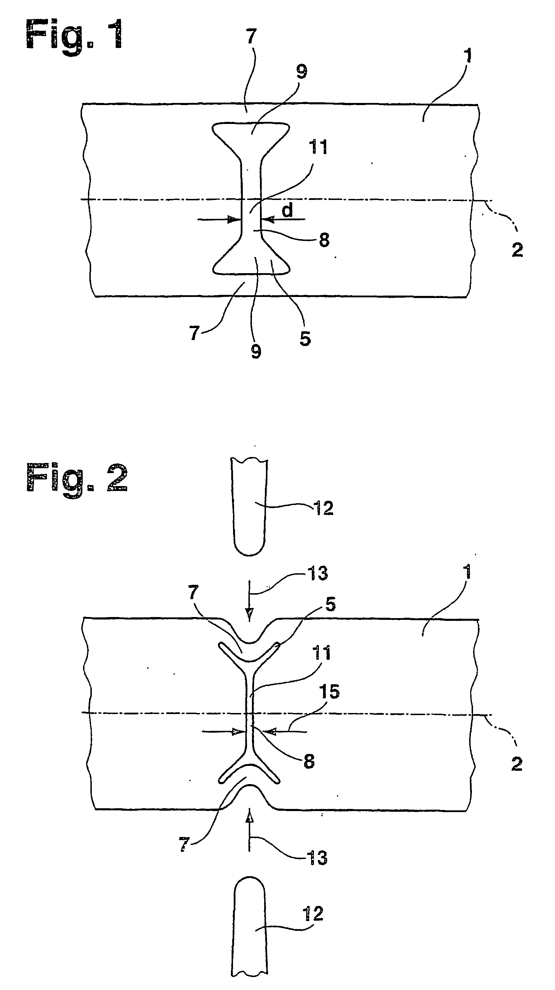

Figur 1 zeigt einen Teilausschnitt eines erfindungsgemäßen Werkstücks 1. Das Werkstück 1 kann ein sich entlang einer Längsachse 2 erstreckendes Blechband oder ein Blechring sein, das zumindest eine Aussparung 5 aufweist. Die beispielsweise mit einer umlaufenden geschlossenen Begrenzung ausgebildete Aussparung 5 hat beispielsweise die Form einer Hantel oder einer Garnrolle.
Jede andere Form der Aussparung 5 ist möglich. Die Aussparung 5 ist so ausgelegt, daß in einem streifenförmigen Randbereich 7 des Werkstücks 1 ein grösseres Leervolumen 9 als in einem mittleren Bereich 8 der Aussparung 5 vorhanden ist.
Im mittleren Bereich 8 gibt es einen sich quer zur Längsachse 2 erstreckenden Verbindungssteg 11, der in Richtung der Längsachse 2 eine Dicke oder bei eienr kreisförmigen Aussparung 5 einen Durchmesser d aufweist, die bzw. der so groß ist, daß sie bzw. er im montierten Zustand des Werkstücks 1 beispielsweise fast oder ganz zusammengerückt, also null ist. Der Verbindungssteg 11 verbindet das eine grössere Leervolumen an einem Randbereich 7 mit dem anderen grösseren Leervolumen an dem anderen Randbereich 7.

Figur 2 zeigt ein erfindungsgemäßes Werkstück 1, das plastisch verformt ist. Ausgehend von einem Werkstück 1 gemäß Figur 1 wird beispielsweise in jedem Randbereich 7 ein Werkzeug 12 angelegt, das in einer Verformungsrichtung 13 quer zur Längsachse 2 eine Kraft auf das Werkstück 1 ausübt und das Leervolumen 9 der Aussparung 5 zusammendrückt. Dabei wird das Werkstück 1 in Richtung der Längsachse 2 in einer Ausdehnung, einer Verbindungsrichtung 15, senkrecht zur Verformungsrichtung 13 zusammengezogen. Das Leervolumen 9 und der Verbindungssteg 11 sind beispielsweise fast oder gar nicht mehr vorhanden. Da eine äußere Kraft mittels des Werkzeugs 12 nur in einem Randbereich 7 des Werkstücks 1 aufgesetzt werden kann, ist es sinnvoll, die Aussparung 5 so auszulegen, daß der größte Anteil des Leervolumens 9 der Aussparung 5 in diesem Randbereich 7 vorhanden ist, weil so die Kräfte für eine plastische Verformung gering sind und sich dadurch die plastische Verformung am einfachsten durchführen läßt.

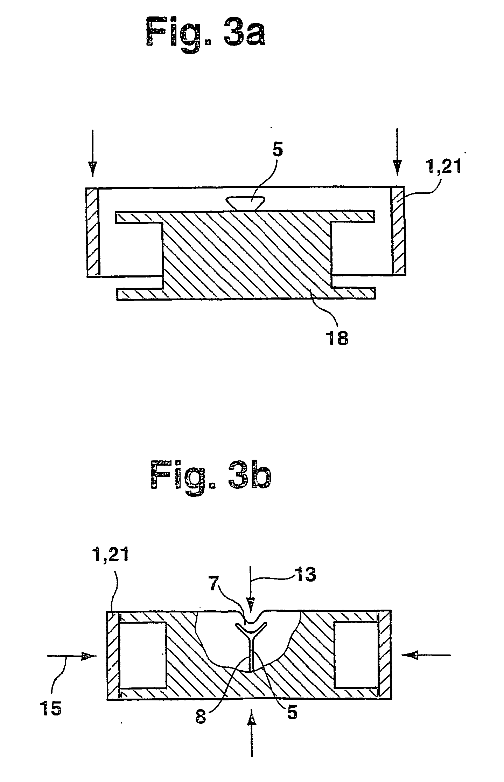

Figur 3a zeigt, wie ein Werkstück 1 auf ein Innenteil 18 aufgeschoben wird. Das Werkstück 1 ist beispielsweise ein Rohrelement 21 und das Innenteil 18 ist ein Spulenkörper einer elektrischen Maschine, wobei das Rohrelement 21 in diesem Fall ein magnetisches Rückschlußelement darstellt. Das Rohrelement weist im Vergleich zu einem zweiteiligen Rohrelement mit einer durchgehenden Verbindungstelle nach dem Stand der Technik den Vorteil auf, dass kein lückenhafter Übergang vorhanden ist, der den Fluss des Magnetfelds im Rückschlußelement stört.

Das Rohrelement 21 hat einen größeren Innendurchmesser als der Außendurchmesser des Innenteils 18. Wenn das Rohrelement 21 mittels des Werkzeuges 12 plastisch verformt ist, liegt das Rohrelement 21 dicht an dem Innenteil 18 an und ist dadurch auf dem Innenteil 18 befestigt (Figur 3b).

Figur 3b zeigt ein Rohrelement 21, das auf einem Innenteil 18 befestigt ist. Das Rohrelement 21 wurde durch das Werkzeug 12 verformt, so daß die Aussparung 5 zusammengedrückt wurde. Dabei zieht sich das Rohrelement 21 in einer Verbindungsrichtung 15 zusammen, d.h. im Fall des Rohrelements 21 wird der Innendurchmesser des Rohrelements 21 kleiner. Die plastische Verformung wird solange ausgeführt, bis der Innendurchmesser des Rohrelements 21 ungefähr dem Außendurchmesser des Innenteils 18 entspricht und darüber hinaus noch etwas weiter verformt, so daß eine ausreichende Kraft entsteht, die das Rohrelement 21 auf das Innenteil 18 preßt.

## Patentansprüche

1. Werkstück zur Montage,
bestehend aus einem plastisch verformbaren Material,
**dadurch gekennzeichnet,**
**dass** das Werkstück (1) zumindest eine Aussparung (5) hat, die im montierten Zustand durch eine plastische Verformung des Werkstücks zumindest teilweise verkleinert ist.

2. Werkstück nach Anspruch 1,
**dadurch gekennzeichnet,**
**dass** das Werkstück (1) ein Rohrelement (21) bildet, und dass das Rohrelement (21) auf zumindest einem Innenteil (18) durch plastische Verformung montiert ist.

3. Werkstück nach Anspruch 2,
**dadurch gekennzeichnet, dass**
das Innenteil (18) ein Spulenkörper einer elektrischen Maschine ist.

4. Werkstück nach Anspruch 1 oder 2,
**dadurch gekennzeichnet,**
**dass** das Werkstück (1) ein Rohrelement (21) bildet, und dass das Rohrelement (21) als ein magnetisches Rückschlusselement für eine elektrische Maschine dient.

5. Werkstück nach Anspruch 1,
**dadurch gekennzeichnet, dass**
die Aussparung (5) hantelformähnlich ausgebildet ist.

6. Werkstück nach Anspruch 1,
**dadurch gekennzeichnet, dass**
das Werkstück (1) aus Metall ist.

7. Werkstück nach Anspruch 1,
**dadurch gekennzeichnet, dass**
das Werkstück (1) nach der plastischen Verformung zumindest in einer Ausdehnung verkleinert ist.

## Claims

1. Workpiece for mounting, consisting of a plastically deformable material, **characterized in that** the workpiece (1) has at least one clearance (5) which, in the mounted state, is at least partially reduced due to a plastic deformation of the workpiece.

2. Workpiece according to Claim 1, **characterized in that** the workpiece (1) forms a tubular element (21), and **in that** the tubular element (21) is mounted on at least one inner part (18) by means of plastic deformation.

3. Workpiece according to Claim 2, **characterized in that** the inner part (18) is a coil former of an electric machine.

4. Workpiece according to Claim 1 or 2, **characterized in that** the workpiece (1) forms a tubular element (21), and **in that** the tubular element (21) serves as a magnetic return element for an electric machine.

5. Workpiece according to Claim 1, **characterized in that** the clearance (5) has a design resembling a dumbbell shape.

6. Workpiece according to Claim 1, **characterized in that** the workpiece (1) consists of metal.

7. Workpiece according to Claim 1, **characterized in that** the workpiece (1) is reduced at least in one extent after plastic deformation.

## Revendications

1. Pièce à monter,
composée d'une matière susceptible de déformation plastique,
**caractérisée en ce que**
la pièce (1) possède au moins un évidement (5) qui, à l'état monté, est au moins partiellement réduit par une déformation plastique de la pièce.

2. Pièce selon la revendication 1,
**caractérisée en ce que**
la pièce (1) forme un élément tubulaire (21) et cet élément tubulaire (21) est monté sur au moins une partie intérieure (18) par une déformation plastique.

3. Pièce selon la revendication 2,
**caractérisée en ce que**
la partie intérieure (18) est un corps de bobine d'une machine électrique.

4. Pièce selon la revendication 1 ou 2,
**caractérisée en ce que**
la pièce (1) forme un élément tubulaire (21) et cet élément tubulaire (21) sert d'élément de retour magnétique pour une machine électrique.

5. Pièce selon la revendication 1,
**caractérisée en ce que**
l'évidement (5) est en forme d'haltère.

6. Pièce selon la revendication 1,
**caractérisée en ce que**
la pièce (1) est en métal.

7. Pièce selon la revendication 1,
**caractérisée en ce qu'**
après la déformation plastique, la pièce (1) est réduite dans au moins une dimension.
